# EUROPEAN PATENT SPECIFICATION

(11) **EP 2 254 276 B1**
(45) Date of publication and mention of the grant of the patent: **09.04.2014**
(21) Application number: 09305465.8
(22) Date of filing: 20.05.2009
(51) Int. Cl.: H04L 12/26

(54) **Method for signalling of data transmission path properties to a non-OAM observent client**
Verfahren zur Signalisierung von Datenübertragungspfadeigenschaften an einen Client, der nicht OAM compatibel ist
Procédé de signalisation des propriétés du chemin de transmission de données à un client qui ne respecte pas OAM

(43) Date of publication of application: 24.11.2010
(73) Proprietor: Alcatel Lucent, 75007 Paris (FR)
(72) Inventor: Grandi, Pietro, 20139, Milan (IT); Sestito, Vincenzo, 20137, Milan (IT); Busi, Italo, 20023, Cerro Maggiore (IT); Torassa, Sergio, 17019, Varazze (IT); Grammel, Gert, 71254, Ditzingen (DE); Qiu, Ray, Pleasanton, CA 84588 (US); Nothaft, Alfred, Friso, 75034 (US)
(74) Representative: Mildner, Volker

(56) References cited:
- EP-A- 1 320 219
- WO-A-2006/076493
- US-A1- 2007 025 256
- "OAM functions and mechanisms for Ethernet based networks" RECOMMENDATION ITU-T Y.1731, [Online] February 2008 (2008-02), XP002555038 Retrieved from the Internet: URL:http://mirror.itu.int/dms/pay/itu-t/re c/y/T-REC-Y.1731-200802-I!!PDF-E.pdf> [retrieved on 2009-11-11]

## Description

### Field of the Invention

The invention relates to a method and a network device for signalling of data transmission path properties regarding a data transmission path.

### Background

Background of the invention is the principle of exchanging operation - administration - maintenance information for the purpose of monitoring the properties of a data transmission path.

For packet transport networks supporting Ethernet OAM tools it is known to exchange Ethernet operation - administration - maintenance (OAM) messages between network devices in order to monitor and determine transmission properties of a data transmission path. Such a path may be a path between network devices. Such Ethernet OAM messages are exchanged as packet based messages.

For transport networks such as synchronous digital hierarchy SDH or optical transport networks OTN it is known that network devices providing a data transmission path exchange OAM information within an overhead of a data transport unit which is transmitted over the network between the two network devices.

The document WO 2006/076493 A2 discloses a method for monitoring an end node using Ethernet connectivity fault management. A network endpoint device in the form of an access network node provides a data transmission path to a client device via a client-server interface. The network endpoint device receives via a server-network interface an operation-administration-maintenance information in the form of a query message that is generated by an internal network device in the form of a broadband access server. The operation-administration-maintenance information in the form of the query message is terminated by the network endpoint device and the query message is translated into a new query message according to a native protocol, which then is passed on to the client device.

The document US 2007/025256 A1 discloses a broadband access node which includes a port for connection with a Digital Subscriber Line and a processor to run code that implements a virtual maintenance end point.

### Summary

According to the invention, a method for signalling of data transmission path properties is proposed. The method contains several steps at a first network endpoint device as defined in claim 1.

The proposed method has the advantage of signalling defined in formation towards the client device properties regarding the data transmission path in spite of the fact that the OAM information generated by the second network endpoint device or internal network devices received by the first network endpoint device are terminated at the first network endpoint device.

A further advantage is, that the client is informed about transmission properties of the data transmission path via the transmission property message without the client having to be able to receive OAM information generated by the second network endpoint device, internal network devices or further client devices. The client device does not have to determine transmission property parameters for the purpose of monitoring transmission properties of a transmission path itself but is informed about such properties by the first network endpoint device via the transmission property message.

An even further advantage is, that the client device is informed about data transmission path properties of the data transmission path derived from OAM information even in the case that the operator decides to suppress the transmission of the OAM information from within the network via a network endpoint device to the client device.

According to a further aspect, the transmission property parameter regards to a data transmission performance via the data transmission path. Preferably, the data transmission performance includes at least one or any of the following properties: error rate, band width and/or latency.

According to a further aspect, the client-server interface is an Ethernet user network interface (UNI). Preferably, the transmission property message is an Ethernet OAM message signalled from the first network endpoint device to the first client device.

According to a further aspect, the OAM information are packet based OAM messages.

According to a further aspect, the packet based OAM messages are Ethernet OAM messages.

According to a further aspect, the step of terminating the received OAM messages includes terminating any received Ethernet OAM messages at the first network endpoint device.

According to a further aspect, the OAM information is OAM information transmitted within an overhead of a data transport unit of a network. Such a network is preferably an SDH network or an OTN network.

Furthermore, a network endpoint device for signalling of data transmission path properties and adapted to perform the method as defined in claim 1 is proposed. The network endpoint device contains means for providing via a client-server interface to a client device at least one data transmission path. Such data transmission path is a path between the network endpoint device and a second network endpoint device. Furthermore, the network endpoint device contains means for receiving and terminating OAM information. In addition, the network endpoint device contains means for determining at least one transmission property parameter from such received OAM information which was generated by the second network endpoint device, internal network devices and/or further client devices connected to the network. The transmission property parameter is regarding to a data transmission property of the data transmission path. The claimed network endpoint device includes decision means and transmission means for signalling at least one transmission property message towards the client device via the client-server interface in dependence on the determined at least one transmission property parameter.

### Brief description of the drawings

Figure 1 depicts different levels for exchanging Ethernet OAM messages according to the prior art.
Figure 2 depicts different devices participating in the proposed method of signalling of data transmission path properties according to a first embodiment.
Figure 3 depicts an alternative solution for the step of signalling a data transmission path property.
Figure 4 depicts an alternative solution for the step of providing a data transmission path by a first network endpoint device to a client device.
Figure 5 depicts different levels for exchanging Ethernet OAM messages and signalling a transmission property message according to a second embodiment of the proposed method.
Figures 6 and 7 depict data transmission paths according to alternative solutions.
Figure 8 depicts an embodiment of a proposed network endpoint device.

### Description of embodiments

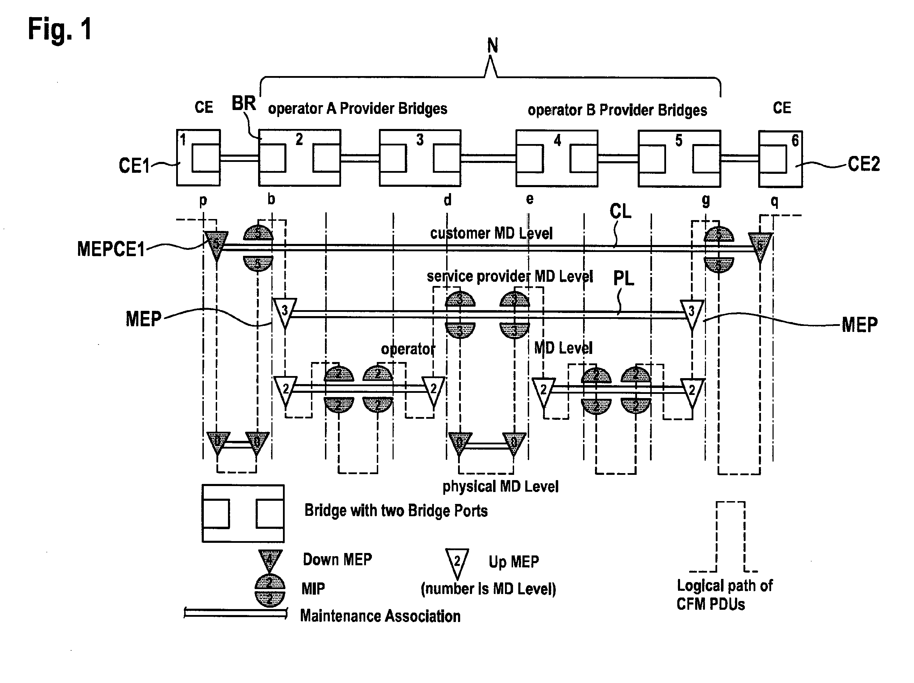

Figure 1 depicts the principle of exchanging Ethernet OAM messages on different levels in a network for as described in the Telecammunications Standard IEEE Std 802.1 ag - 2007. Such a principle is also known from the Telecommunication Standard ITU-T Y.1731 (02/2008).

The technical terms used in this specification for explaining the principle of exchanging OAM information are taken from the above mentioned references. Nevertheless, these terms shall only be of example and are not intended to limit the scope of the claimed invention.

According to Figure 1, a first customer equipment CE1 is connected to an operator bridge BR of a network N. The first customer equipment contains a Maintenance Entity Group End Point MEPCE1 which receives Ethernet OAM messages from other Maintenance Entity Group End Points MEP. These MEPs may be located at a second customer equipment CE2 at the same level as the customer equipment, which is the customer level CL. Furthermore, these MEPs may be located at network devices of the network N at lower levels, such as the provider level PL.

According to the prior art, in order to benefit from information given by sending and receiving Ethernet OAM messages a customer equipment CE1 has to run certain protocols that support the sending, receiving and filtering of such Ethernet OAM messages.

A customer equipment not supporting Ethernet OAM messaging is not able to send and/or receive Ethernet OAM messages. Therefore, such customer equipment is not able to draw conclusions about properties of a data transmission path by analysing Ethernet OAM messages.

Furthermore, according to the prior art, a customer equipment has to receive Ethernet OAM messages in order to draw conclusions about properties of a data transmission path by analysing Ethernet OAM messages. This implies that the Ethernet OAM messages have to be passed on from the operator bridge BR of the network to the customer equipment. In the case that an operator of a network does not wish to reveal certain information about the network by passing on Ethernet OAM messages to a customer equipment, the operator will suppress the transmission of the Ethernet OAM messages by the operator bridge BR to the customer equipment. This has also the disadvantage, that the customer equipment is not able to draw conclusions about properties of a data transmission path by analysing Ethernet OAM messages.

### First Embodiment

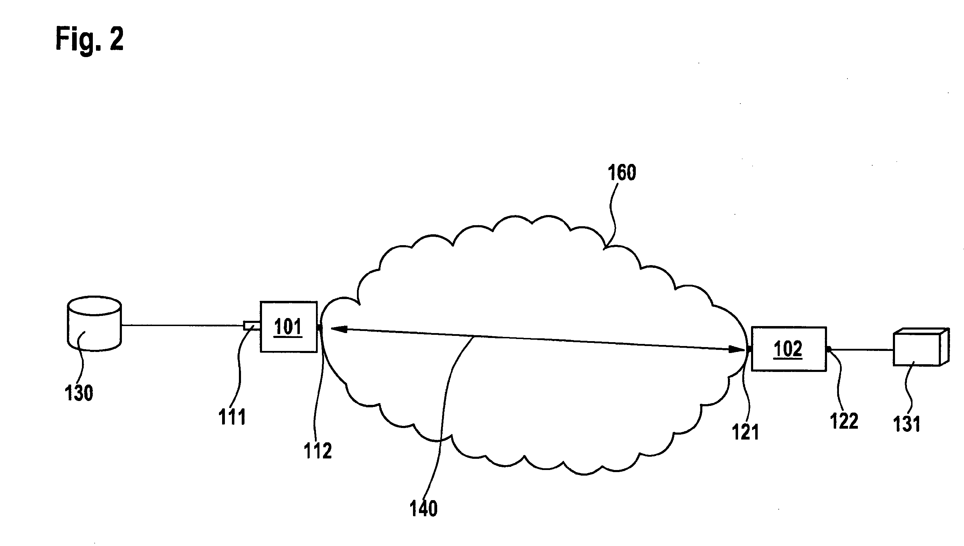

Figure 2 depicts different devices participating in the proposed method of signalling of data transmission path properties. A first client device 130 is connected via a first client-server interface 111 to a first network endpoint device 101. The first network endpoint device 101 provides a transmission path 140 through a network 160 between the first network endpoint device 101 and a second network endpoint device 102. The second network endpoint device 102 contains a second client-server interface 122 to which a second client device 131 is connected.

The first network endpoint device 101 receives via a first server-network interface 112 OAM information which is then terminated at the first network endpoint device. The OAM information may be generated by the second network endpoint device 102, internal network devices (not shown in Figure 2) and/or the second client device 131. The OAM information is used for determination of at least one transmission property parameter regarding a data transmission path property of the data transmission path 140. The first network endpoint device 101 then signals via the client-server interface 111 at least one transmission property message towards the first client 130.

The proposed method has the advantage, that the client device is informed about data transmission path properties of the data transmission path derived from OAM information even in the case that the client device does not support the signalling of the currently known Ethernet OAM messages by running according protocols or in the case that the operator decides to suppress the transmission of the OAM information from within the network via a network endpoint device to the client device. Such a network endpoint device may be an operator bridge at an end of a network.

A transmission property may be
- an occurrence of errors during data transmission,
- a data transmission capacity,
- a latency of a data transmission,
- an availability of a transmission path provided by a network,
- an ability of a network to protect a provided transmission path by means of a protection path, or
- a current rerouting of a data transmission via a protection path

In relation to the above mentioned transmission properties a transmission property parameters may then be
- an error rate,
- a bandwidth,
- a latency for a single transmission path or a differential latency for a group of transmission paths,
- an indication whether a provided transmission path is available,
- an indication whether a provided path can be protected by means of a protection path, or
- an indication whether the network is taking actions to protect a provided path by rerouting a data transmission via a protection path.
   In relation to the above mentioned transmission properties and the above mentioned transmission property parameters a transmission property message may contain one or more of the following
- a measured value of an error rate and/or a data item indicating a change of the error rate,
- a measured value of a bandwidth and/or a data item indicating a change of the bandwidth,
- a measured value of a latency for a single transmission path, a measured value of a differential latency for a group of transmission paths and/or a data item indicating a change of a latency or a differential latency,
- a data item or logical data indicating that a provided transmission path is / is not available,
- a data item or logical data indicating that a provided transmission path can / can not be protected by means of a protection path, or
- a data item or logical data indicating that the network is taking actions to protect a provided path by rerouting a data transmission via a protection path.

A transmission property message is signalled by the first network endpoint device 101 towards the first client device 130 in the case that a transmission property parameter has changed.

Alternatively, a transmission property message is signalled in the case that a measured value exceeds a first given threshold. Preferably, signalling of the transmission property message is continued until the determined transmission property parameter falls below a second given threshold.

In a further alternative solution, a transmission property message is signalled in the case that a transmission property parameter has been determined for the first time after providing the transmission path 140 to the client device 130. This is carried out in order to inform the first client about transmission properties of a just recently provided data transmission path.

Alternatively, the first network endpoint device 101 determines a first measurement value of the at least one transmission property parameter for a first time instance and a second measurement value for a second time instance. The first network endpoint device 101 signals the transmission property message to the first client device 130 in the case, that the second measurement value differs from the first measurement value.

Alternatively, the first network endpoint device 101 signals the at least one transmission property message towards the first client device 130 in the case that the difference between that first measurement value and that second measurement value exceeds a predetermined threshold.

Preferably, the at least one transmission property message contains the most recently determined value of the transmission property parameter.

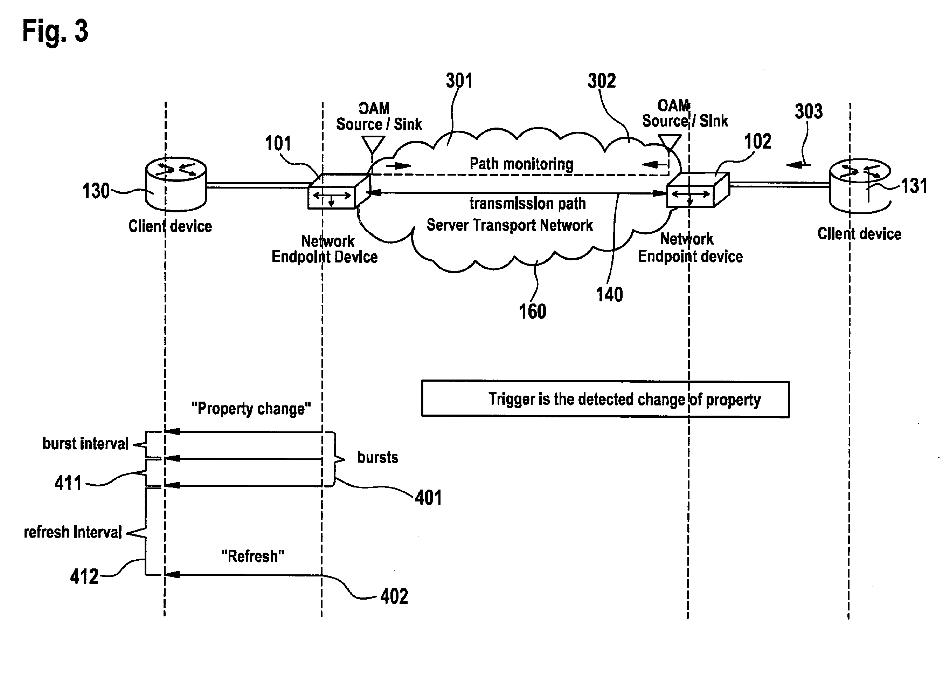

Figure 3 depicts an alternative for the step of signalling the transmission property message.

The first client device 130 is connected to the first network endpoint device 101. The first network endpoint device 101 is connected through the network 160 via the transmission path 140 with the second network endpoint device 102. The second client device 131 is connected to the second network endpoint device 102. The first network endpoint device 101 and the second network endpoint device 102 exchange OAM information 301, 302. Preferably, also the second client device 131 sends OAM information 303. In the case that the first network endpoint device 101 detects a change of a transmission property parameter or that a parameter reaches a certain threshold, it sends a transmission property message as a set of burst signals 401 to the first client device. Two consequent burst signals are separated in time by a burst interval 411. The burst signals 411 may contain a data item indicating the kind of transmission property whose parameter has changed and/or a determined value of that transmission parameter. Preferably, after sending the set of burst signals, first network endpoint device 101 sends a refresh signal 402 after a time interval called refresh interval 412. This refresh signal 402 indicates that the previously signalled parameter is still valid. The refresh signal 402 may contain a data item indicating the kind of transmission property whose parameter is still valid and/or a determined value of that transmission parameter.

According to an alternative, the transmission property message is sent to the first client device 130 in a data plane.

In the case that the client-server interface is an Ethernet user-network-interface UNI, the transmission property message is sent as a packet based message in the data plane. Preferably, the packet based message is an Ethernet OAM message.

According to another alternative, the transmission property message is sent to the first client device 130 in a control plane as a control plane message.

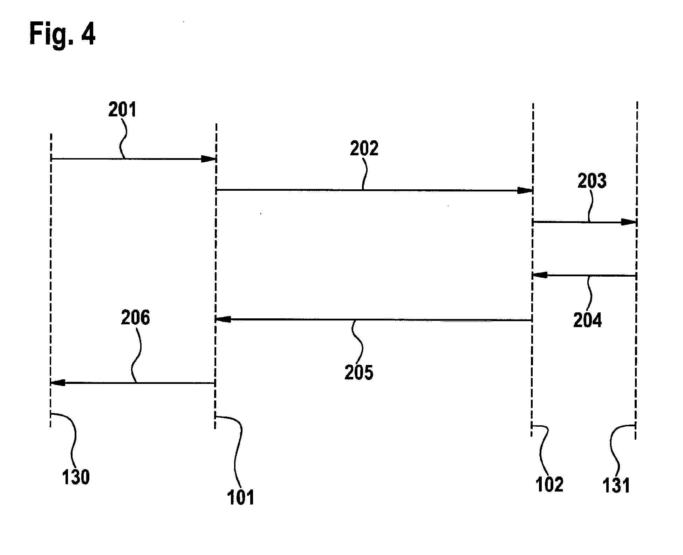

The data transmission path 140 is provided by carrying out different steps as illustrated in Figure 4. The first network endpoint device 101 receives via the client-server interface 111 a connection request message 201 from the first client device 130. Upon this reception, the first network endpoint device 101 sends a path set-up request message 202 towards the second network endpoint device 102. This second network endpoint device 102 sends upon this reception a further connection request message 203 via its second client-server interface 122 towards the second client device 131. Upon receiving a connection acknowledgement message 204 from the second client device 131, the second network endpoint device 122 sends a path set-up acknowledgement message 205 towards the first network endpoint device 101. The first network endpoint device 101 sends upon this reception a further connection acknowledgement message 206 towards the first client device 130 via its first client-server interface 111.

### Second Embodiment

The second embodiment contains all features described in the first embodiment as well as further features described in the following.

In the following, it will be explained, in which way the different steps of the proposed method of signalling is supported by sending and/or receiving Ethernet OAM messages at the first network endpoint device.

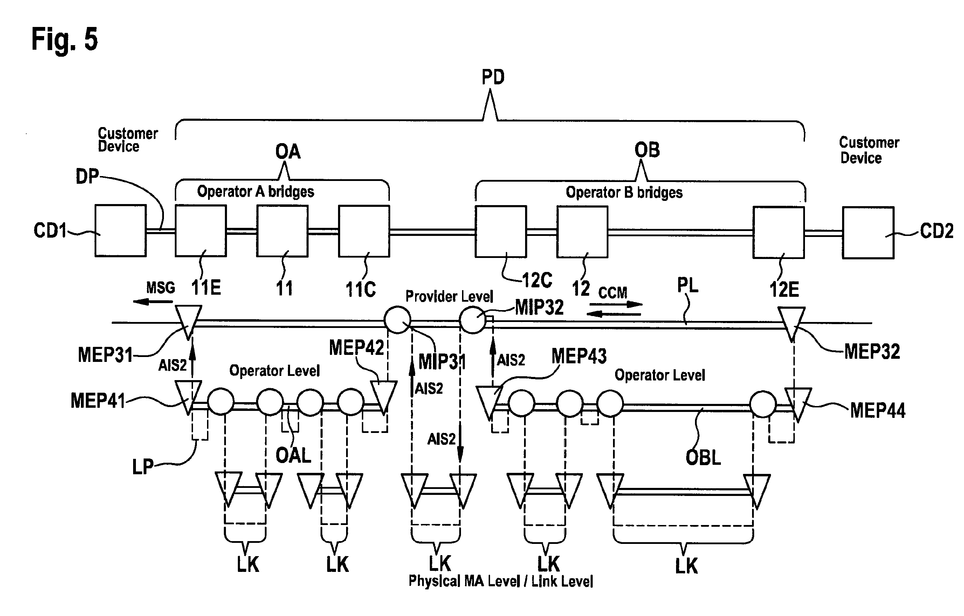

Figure 5 depicts different levels for signalling of Ethernet OAM messages. The first client device CD1 communicates with a second client device CD2 over a data transmission path DP. The network for providing the data transmission path DP is depicted as a provider domain PD. The provider domain PD contains in this example two consecutive domains. The two consecutive domains are a first operator domain OA and a second operator domain OB. The first operator OA domain is formed by first network device 11, 11C, 11E. The second operator domain OB is formed by second network devices 12, 12C, 12E.

The first client device CD1 is connected to a first network endpoint device 11E at one end of the first operator domain OA. On the other end of the first operator domain OA a first connecting network device 11C is located, which is connected to a second connecting network device 12C of the second operator domain OB. The second client device CD2 is connected to a second network endpoint device 12E of the second operator domain OB.

The first connecting network device 11C and the connecting network device 12C are considered as internal network devices. Further network devices 11, 12 residing between the first network endpoint device 11E and the second network endpoint device 12E are also considered as internal network devices.

The connections between elements such as network devices 11, 11C, 11E, 12C, 12E, 12 are given by data links LK.

A link LK is considered as a domain itself.

Each domain is associated with a level for exchanging Ethernet OAM messages. Each of these levels is associated with a maintenance entity group MEG. A MEG comprises maintenance entities such as maintenance entity group end points MEP and maintenance entity group intermediate points MIP. MEPs are located at the boundary of a domain. MIPs are located at intermediate positions along a MEG associated with a level. Such intermediate positions are positions at which a boundary of a next lower level of a smaller domain begins.

At the highest level depicted, which is the provider level PL of the provider domain PD, the MEG comprises a MEP as the MEP 31 located at the first network endpoint device. Furthermore, it comprises a MIP as the MIP31 at the first connecting network device 11C of the first operator domain OA, a MIP as the MIP32 at the second connecting network device 12C of the operator domain B, and a MEP as the MEP32 at the second network endpoint device 12E.

At the second highest level, which is the level of the operator domains OA, OB, there are two equivalent levels: the first operator level OAL of the first operator domain OA and the second operator level OBL of the second operator domain OB. At each of the boundaries of these levels/domains there are MEPs located as MEP41, MEP42, MEP43 and MEP44. Within these levels/domains there are MIPs located at each of the connecting network devices 11C, 12C as MIPA, MIPB.

At the lowest level, which is the level of the links LK, a MEP is located at each end of each connecting link LK.

The logical path LP of Ethernet OAM messages is depicted as a dotted line. It starts at the MEP31 of the first network endpoint device 11E at the provider level PL, descending to the MEP41 on the operator level at the first network endpoint device 11E. Within the provider domain PD the logical path LP descends from a MIP of one level to a MEP of a next lower level at those locations, where a beginning boundary of a level/domain is entered. Whenever an ending boundary of a level/domain is reached, the logical path PD ascends from a MEP of that level to a MIP or a MEP of the next highest level.

Different kinds of Ethernet OAM messages are used.

A first kind of messages is that of messages initiated by a MEP on one level and terminated by another MEP on the same level. Such messages are for instance continuity check messages CCM. A CCM initiated by the MEP at the first network endpoint device MEP31 on the provider level PL passes along the logical path LP all the way to the MEP on the other side of the provider level PL, which is the MEP at the second network endpoint device MEP32. By exchanging such CCM messages periodically, the two MEPs on one level can monitor a possible loss of continuity of a connection between them. When a CCM message is initiated at provider level PL, it is passed on by further MIPs and MEPs of lower levels or MIPs of the provider level along the logical path LP until it reaches the MEP at the other boundary of the provider level MEP32 at the second network endpoint device 12E, where it is terminated by this MEP.

A second kind of messages is that of messages initiated by a MEP at one level and terminated by a MEP at a next higher level. Such a message is for instance the alarm indication signal AIS. When a MEP detects a loss of continuity of a connection on its level it sends an AIS to the MEP of the next higher level. By this, the MEP at the next higher level receiving the AIS is informed that a failure of data transmission is due to a connectivity problem on the level below.

For example, if the MEP43 at the second connecting network device 12C located at the beginning of the operator domain B detects a loss of continuity it initiates an AIS2 which propagates to the MEP at the first network endpoint device 11E at the provider level MEP31, where it is terminated. An AIS is terminated by a MEP located one level higher than the MEP which initiated the AIS.

Ethernet OAM messages generated by a MEP on the provider level or by a MEP of a lower level are received at the first network endpoint device and are terminated at the first network endpoint device.

Figure 5 depicts an embodiment of the proposed method of signalling in which a client device CD1 does not support Ethernet OAM messaging but is still informed about transmission properties of a data transmission path DP derived from Ethernet OAM messages. This is achieved by a first network endpoint device 11E receiving Ethernet OAM messages, terminating these messages, determining at least one transmission property parameter from these received messages and signalling a transmission property message towards the client device in dependence on the determined transmission property parameter.

An example of a transmission property is a continuity of a connection a level. An example of a transmission property parameter is then a Boolean data indicating whether a loss of continuity has occurred on that level or not. An example of a transmission property message is then a message containing the value of the Boolean data. Such a transmission property message MSG is sent from the first network endpoint device 11E to the client device CD1.

A loss of continuity can be detected at provider level due to the fact that the MEP31 at the first network endpoint device 11E is not periodically receiving CCM messages on the provider level from the MEP 32 of the second network endpoint device 12E as expected. The first network endpoint device 11E determines from CCM messages received at an earlier time instance and the fact that CCM messages are not received at a later time instance the property that a loss of continuity has occurred. The transmission property parameter is then a Boolean data indicating that a loss of continuity has occurred. In such a case the MEP21 of the first network endpoint device 11E sends a transmission property message MSG towards the client device CD1. The transmission property message MSG contains a value of a Boolean data indicating that a loss of continuity has occurred on the provider level CL. By receiving this information, the client device CD1 is informed that possibly perceived problems of data transmission are caused by a loss of continuity occurring on a segment of the connection between the first network endpoint device 11E and the second network endpoint device 12E. Thus, the client device CD1 draws the conclusion that perceived problems of data transmission are not caused by problems of data transmission between the first network endpoint device 11E and the client device CD1.

In a further alternative solution, a loss of continuity may be detected at operator level due to the fact that the MEP43 at the second connecting network device 12C is not periodically receiving CCM messages on the operator level from the MEP 44 of the second network endpoint device 12E as expected. The MEP on the operator level at the second connecting network device MEP43 determines from CCM messages received at an earlier time instance and the fact that CCM messages are not received at a later time instance the property that a loss of continuity has occurred. In case of a detected loss of continuity the MEP43 inserts an AIS signal AIS2 which is sent to the next higher level, the provider level. At the provider level, the AIS message AIS2 is received by the MEP31 of the first network endpoint device 11E. Here, the AIS message is terminated by the MEP31. The first network endpoint device determines from the AIS message a transmission property parameter which may be a Boolean data indicating whether a loss of continuity has occurred on the provider level or not. This determination is indirectly based on the CCM messages which were received and terminated at provider level. The transmission property message MSG sent by the first network endpoint device 11E to the client device CD1 contains the value of the Boolean data.

As explained for the different embodiments explicated above, a transmission property parameter can be determined from Ethernet OAM messages which were generated by a second network endpoint device or by an internal network device.

Further alternatives of determining transmission path properties from received Ethernet OAM messages at a first network endpoint are described in the following.

For the purpose of determining an error rate, a MEP configured at the first network endpoint device 11E and a MEP configured at the second network endpoint device 12E periodically exchange frames with continuity check messages CCM. The CCMs contain loss measurement information LM. The frame loss ratio FLR , as a measured error rate, is then for a time interval T the ratio of the number of frames not delivered to a MEP divided by the number of service frames delivered to a MEP. The number of frames not delivered to a MEP is the difference between the number of service frames sent to the MEP and the number of service frames received by the MEP. The number of service frames sent by the sending MEP to the receiving MEP for the time interval T may be indicated to the receiving MEP by including this number in the loss measurement information LM of the CCMs sent by the sending MEP.

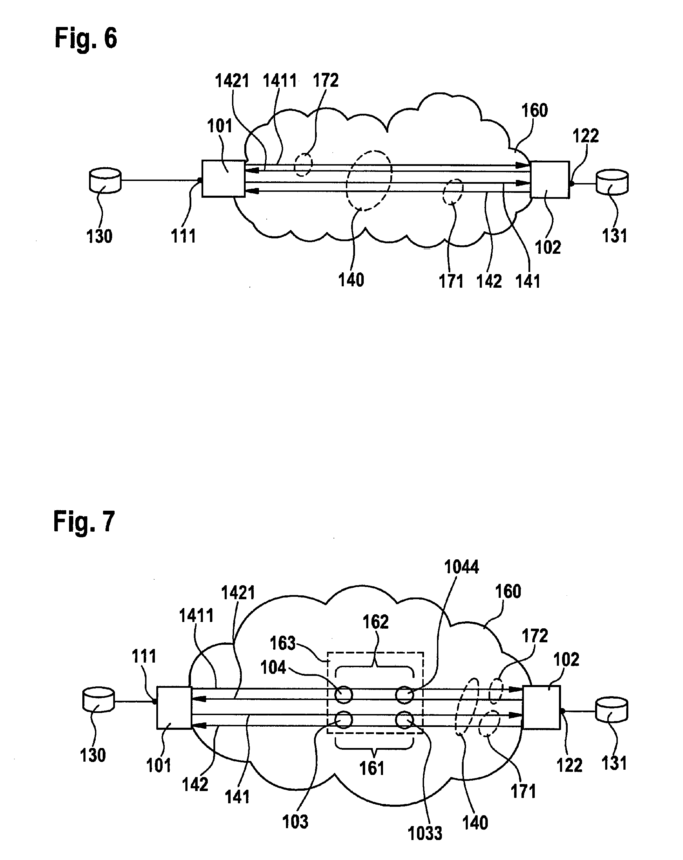

Figure 6 depicts all elements depicted in Figure 2. Furthermore, the provided transmission path 140 contains of a main path 171 and an additional path 172. The main path 171 contains a main uplink path 141 and a main downlink path 142. The additional path 172 contains an additional uplink path 1411 and an additional downlink path 1421.

For the purpose of determining a bandwidth of a provided path Figure 6 is to be considered. The main and the additional paths 171, 172 may be a main path and a spare path of an Ethernet connection. The MEPs at the first and second network endpoint devices 101, 102 exchange loopback messages LBMs on each of the paths 171, 172 in order to verify connectivity on the paths. A loopback LBM message is a request message sent by one device to another device. When receiving the LBM, the other device replies by sending a loopback reply message LRM to the device that sent the LBM. When a LBM is sent from a first MEP at the first network endpoint device 111 to a second MEP of the second network endpoint device 122 via the main uplink path 141 the second MEP responds by sending a loop back reply message LRM via the main downlink path 142 to the first MEP. The second MEP sends LBMs to the first MEP which are answered by the first MEP by sending a LRM to the second MEP. According to an alternative solution, the LBM sent by a network device carries an additional data unit called test type length value data TLV. When another network device receives this TLV data, it can derive from this data the bandwidth available on the transmission path on which the LBM was sent.

By sending LBMs and receiving LBMs periodically on each path 171, 172 the network endpoint devices are able to verify connectivity and bandwidth on each path 171, 172. Thus, if the bandwidth of each path 171, 172 is known, a change of available bandwidth can easily be detected and determined in the case that a path has a failure.

For the purpose of determining a latency for a single transmission path 171 or a differential latency for a group of transmission paths 171, 172 the principle of frame delay FD is exploited. When seeking to measure the delay of a single path 171 the first MEP at the first network endpoint device 101 sends a delay measurement message DMM to the second MEP at the second network endpoint device 102, whereby the DMM includes a time stamp indicating the time at which the DMM was created. Upon reception of the DMM, the second MEP sends a delay measurement reply DRM back to the first MEP. The time stamp of the received DMM is included in the DRM. Thus, when receiving the DRM, the first MEP is able to determine a round-trip delay as a measurement of a latency on the respective path.

The principle of sending DMMs and receiving DRMs including time stamps is carried out on different paths 171, 172 leading to different measurement values of latency for the respective different paths 171, 172. Differential latency is then calculated as the differential delay of the different paths. A change in latency may occur in the case that a path is re-routed within the network. A change in differential latency may occur in the case that one of the paths of a group of paths is rerouted.

Figure 7 depicts all elements which are depicted in Figure 6. Additionally, Figure 7 shows a first and a second internal network device 103, 1033 along the main path 171 forming a first operator path segment 161 of an operator domain 163 within the network 160. The first internal network device 103 is located closer to the first network endpoint device 101 than the second internal network device 1033. Furthermore, Figure 6 shows a third and a fourth internal network device 104, 1044 along the additional path 172 forming a second operator path segment 162 of the operator domain 163 within the network 160. The third internal network device 104 is located closer to the first network endpoint device 101 than the fourth internal network device 1044.

For the purpose of determining whether a provided transmission path is available or not, different kinds of Ethernet OAM messages can be used. A first possibility of determining whether a provided transmission path is available is to detect a loss of continuity using the principle of exchanging CCM messages on one level or multiple levels as described above.

A second possibility of determining whether a provided transmission path is available is to detect a loss of continuity by analysing received remote defect indication signals RDI. A MEP is located at operator level at the third internal network device 104 and another MEP at operator level at the fourth internal network device 1044. The MEP at the first internal network device 103 sends CCM messages on the operator level on the main uplink path 141 to the MEP at the second internal network device 1033. The MEP at the second internal network device 1033 sends CCM messages on the main downlink path 142 to the MEP at the first internal network device 103. In the case that the second internal network device 1033 does not receive CCM messages periodically from the first internal network device 103 it sends an alarm indication signal AIS over the main uplink path 142 to the MEP of the second client device 131 at the next higher level which is the provider level. The MEP of the second client device 102 at the provider level then send an RDI on the provider level over the main downlink path 142 to the MEP of the first network endpoint device 101 on the provider level. When the MEP of the first network endpoint device 101 on the provider level receives the RDI message, it terminates this message. Furthermore, this MEP determines from this message that the main uplink path 141 as a provided transmission path is not available, and signals this condition via a transmission property message to the first client device 130.

For the purpose of determining whether a provided path can be protected by means of a protection path, Ethernet OAM messages as CCM, AIS and/or RDI can be used. This will be explained in the following.

Figure 6 shows the main path 171 as a path provided by the first network endpoint device 101 to the client device 130. A protection path is given as the additional path 172. In case of transmission problems occurring on the main path 171, data transmission can be partially or totally switched to the additional path 172. The client 130 shall be informed about the possibility of switching traffic from the main path 171 to the additional path 172 in order to know whether the data transmission on the main path 171 can be protected. Thus, it is determined whether the additional path is available or not, and a presence of this availability is signalled to the first client device 130. The availability of the additional path 172 can be determined by using the same Ethernet OAM messages as for detecting an availability of a provided main path 171 as already described above.

In the case that a network endpoint device detects transmission problems on the main path 171, it switches the data transmission partially or totally to the additional path 172 or further additional paths, which are not depicted in Figure 6. In such a case, the network endpoint device signals a transmission property message to the client device 130, which contains a data item or logical data indicating that the network is taking actions to protect a provided path by rerouting the data transmission via a protection path. By this message, the client is informed, that occurring data transmission problems are being solved by the network. Thus, the client can draw the conclusion that the occurring data transmission problems do not have to be solved by the client itself, for instance by transmitting data to the second client device via a further data transmission path between the first client device and the second client device, not depicted in Figure 6.

According to an alternative solution, not depicted in Figure 5, the first client device CD1 supports signalling of Ethernet OAM messages. In this alternative solution, the operator decides to suppress the transmission of the OAM information from within the network via the first network endpoint device 11E to the client device CD. Therefore, all Ethernet OAM messages received at the first client device 11E generated by internal network devices, the second network endpoint device or possibly further client devices are terminated at the first network endpoint device 11E. The first network endpoint device determines at least one transmission property parameter from these received messages and signals a transmission property message towards the first client device CD1 in dependence on the determined transmission property parameter. Preferably, this transmission property parameter is signalled as an Ethernet OAM message.

### Third Embodiment

The third embodiment comprises all features described in the first embodiment as well as further features described in the following.

In this third embodiment the received OAM information is exchanged within an overhead of a data transport unit of a network, which is preferably a network of the Synchronous Digital Hierarchy SDH or an Optical Transport Network OTN. Data transport units are exchanged between network endpoint devices and/or internal network devices.

For the purpose of determining an error rate in an SDH network, OAM information is transmitted in a section overhead SOH of a transport frame called synchronous transport module STM. The OAM information is exchanged between the network endpoint devices 101, 102. The OAM information is a parity byte allocated for error monitoring. The parity byte is a function of a Bit Interleaved Parity code BIP using even parity. The BIP is computed over all bits of the previous STM frame. By checking the parity byte BIP an error rate can be determined.

For the purpose of determining an error rate in an OTN network OAM information is transmitted in an overhead of an Optical Transport Unit OTU. The OAM information is exchanged between the network endpoint devices 101, 102. The OAM information is a number of parity bits BIP-X allocated for error monitoring. The parity bits BIP-X are used for an even parity check on payload data contained in the OTU.

For the purpose of determining a bandwidth of a provided path in an SDH network or an OTN the number of virtual containers VC of a virtual concatenation used for data transmission is detected. Contiguous data of a client is split up and mapped into subsidiary data units called virtual containers. Virtual containers holding a part of the same contiguous data of one client form a virtual concatenation group VCG and are called VCG members. Virtual containers are then mapped into one or multiple data transport units of the transporting network. The data transport units may be transmitted over the same path or different paths of the network. After transmission, the contiguous data is merged by extracting the data from the VCG members.

Each VCG member provides a certain data rate for transmission of client data from the first network endpoint device 130 to the second network endpoint device 131. The data transport units of an SDH network or an OTN provide signalling of OAM information in the way that signals are sent in an overhead for coordinating and negotiating between two network elements the number of virtual containers used for virtual concatenation. Such signalling is called link capacity adjustment scheme LCAS. When using this way of signalling between the network endpoint devices 130, 131, they are informed how many virtual containers are available for data transmission, and thus, what the available data rate or bandwidth for data transmission is. The number of virtual containers available for data transmission may change due to failure of transmission on a transmission path for transmitting a subset of virtual containers / VCG members.

For the purpose of determining a differential latency for a group of transmission paths 171, 172 in an OTN or an SDH network, the principle of calculating the differential delay for VCG members is exploited. When the data of the client at a contiguous data rate is split up into two partial data streams at of lower data rates and mapped into members of a VCG these members / virtual containers are given sequence numbers before being transmitted over transmission paths 171, 172. By analysing the sequence numbers of members of a VCG received via different transmission paths and analysing the time instances at which these VCG members were received it is possible do determine the differential delay between the two transmission paths 171, 172.

For the purposes of determining whether a provided transmission path or an additional transmission path for protection is available in an SDH network or an OTN, different kinds of OAM information according to different telecommunication standards can be used. The OAM information loss of signal LOS can be used for this purpose in an SDH network according to the standard ITU-T G.783 (03/2006). Alternatively, the OAM information loss of signal LOS can be used for this purpose in an OTN according to the standard ITU-T G.798 (12/2006). Furthermore, for both SDH networks and/or OTN, the OAM information AIS and/or RDI can be used according to the standard ITU-T G.806. (01/2009).

For the purpose of determining an error rate in an SDH network, the OAM information bit interleaved parity BIP transported in an overhead of a virtual container VCx can be checked for violation according to the standard ITU-T G.707 - Y.1322 (01/2007).

For the purpose of determining an error rate in an OTN, the OAM information bit interleaved parity BIP transported in an overhead of an optical data unit ODUk can be checked for violation according to the standard ITU-T G.709 (03/2003). Furthermore, the number of violations of a bit interleaved parity BIP transported in an overhead of an optical data unit ODUk can be counted, according to the standard ITU-T G.709 (03/2003). Furthermore, the number of errors corrected by a forward error correction FEC algorithm can be used, according to the standards ITU-T G.798 (12/2006) and ITU-T G.709 (03/2003).

The content of the mentioned publications is hereby incorporated in this specification by reference.

For an optical transport network the principle of wavelength division multiplexing can be applied. By this technique, a transmission path is provided by providing transmission of data over an optical signal of a first wave length. A further path, such as a spare path, is provided by providing transmission of data over a second wavelength.

Preferably, the transmission property parameter is signalled as an Ethernet OAM message in the case that the first client device supports Ethernet OAM messaging.

### Embodiment of a network endpoint device

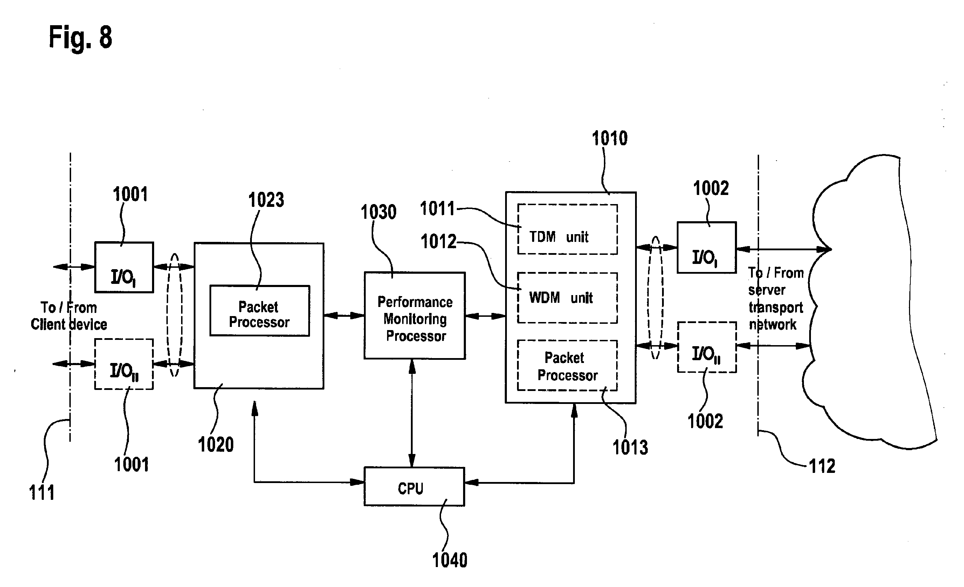

Figure 8 depicts a network endpoint device 1000 according to a preferred embodiment. The network endpoint device comprises a client-server interface 111 formed by first interface means 1001 for input/output purposes. These first interface means 1001 are used for exchanging data and signalling between the network endpoint device 1000 and a client device. The first interface means 1001 are connected to a first handling unit 1020. This first handling unit 1020 comprises preferably a packet processor 1023 for generating data packets for data transmission, in the case that the first interface is an Ethernet user-network-interface.

The first handling unit 1020 is connected to a performance monitoring processor 1030 for determining at least one transmission property parameter. Furthermore, the first handling unit 1020 and the performance monitoring processor 1030 are connected to a central processing unit 1040. The central processing unit 1040 supervises the handling unit 1020 and the packet processor 1023. The network endpoint device 1000 furthermore comprises a server-network interface 112 with second interface means 1002 for input and output purposes. The second interface means 1002 are connected to a second handling unit 1010 which is also connected to the central processing unit 1040 and the performance monitoring processor 1030.

The second handling unit 1010 comprises means for signalling and data transmission depending on the type of network to which the network endpoint device 1001 is connected to.

In the case, that the network is an Ethernet network the second handling unit 1010 comprises at least a packet processor 1013 for handling packets of an Ethernet network. Alternatively, in the case that the network is a network using time division multiplexing technique (TDM), such as an SDH network or an OTN network, the second handling unit 1010 comprises a TDM unit 1011 for handling frames of the format of an SDH or an OTN network. In the case, that the network is an OTN supporting wavelength division multiplex WDM, the second handling unit 1010 comprises a WDM unit for receiving optical signals at different optical wavelengths and converting these optical signals into data. The WDM unit also generates optical signals at different optical wavelengths from the data that is transmitted by the network endpoint device towards the network. The data sent by the network towards the network endpoint device 1000 is received via the second interface means 1002 and passed on to the second handling unit 1010. Depending on the type of network, either the packet processor 1013 of the second handling unit 1010 or the TDM unit 1011 retrieves OAM information from the received data. The OAM information is passed on to the performance monitoring processor 1030. Here, the OAM information is terminated and at least one transmission property parameter is derived from the OAM information. In the case that the performance monitoring processor 1030 decides that a signalling towards the client device via the first interface means 1001 shall occur, the performance monitoring processor 1030 and the processing unit 1040 cause the first handling unit 1020 to generate an according transmission property message. This message is then passed on to the first interface means 1001 from where it is transmitted via the first interface 111 to the client device.

## Claims

1. Method for signalling of data transmission path properties, comprising at a first network endpoint device (110) the steps of
- providing via a client-server interface to a first client device (130) at least one data transmission path (140) from said first server network endpoint device (101) to a second network endpoint device (102)
- receiving via a server-network interface operation administration maintenance information, OAM, generated by said second network endpoint device (102) or internal network devices,
- terminating said received operation-administration-maintenance information,
- signalling via said client-server interface at least one transmission property message towards said first client device (130),
- said second network endpoint device (102) is a network endpoint device to which a second client device (131) is connected via a second client-server interface,
- determining at least one transmission property parameter from said received operation-administration-maintenance information, wherein said transmission property parameter is regarding to a data transmission property of said data transmission path (140),
said at least one transmission property message is signalled towards said first client device (130) in dependence on said at least one transmission property parameter, **characterized in that** said transmission property message contains one or more of the following
• a measured value of an error rate and/or a data item indicating a change of the error rate,
• a measured value of a bandwidth and/or a data item indicating a change of the bandwidth,
• a measured value of a latency for a single transmission path,
• a measured value of a differential latency for a group of transmission paths and/or a data item indicating a change of a latency or a differential latency,
• a data item or logical data indicating that said provided transmission path is or is not available,
• a data item or logical data indicating that said provided transmission path can or can not be protected by means of a protection path, or
• a data item or logical data indicating that the network is taking actions to protect said provided path by rerouting a data transmission via a protection path.

2. Method according to claim 1,
wherein said transmission property parameter is regarding to a data transmission performance via said data transmission path (140).

3. Method according to claim 2,
wherein said client-server interface is an Ethernet user-network interface, UNI.

4. Method according to claim 3,
wherein said operation-administration-maintenance information are packet based operation-administration-maintenance messages.

5. Method according to claim 4,
wherein said packet based operation-administration-maintenance messages are Ethernet operation-administration-maintenance messages.

6. Method according to claim 5,
wherein said step of terminating said received operation-administration-maintenance messages includes terminating any received Ethernet operation-administration-maintenance message at said first server network endpoint device (101) generated by the second network endpoint device (102), internal network devices or further client devices (131) connected to the network.

7. Method according to claim 1 to 2,
wherein said operation-administration-maintenance information is transmitted within an overhead of a data transport unit of a transport network.

8. Method according to claim 7,
wherein said transport network is a network of Synchronous Digital Hierarchy or an Optical Transport Network.

9. Server network endpoint device for providing a data transmission path, said server network endpoint device comprising
- means (1001, 1002) for providing to a first client device via a client-server interface at least one data transmission path from said network endpoint device to a second network endpoint,
- means (1040) for receiving and terminating operation-administration-maintenance information, OAM,
- decision means (1030, 1040) and transmission means (1020, 1001) for signalling at least one transmission property message towards said first client device via said client-server interface,
said second network endpoint device (102) is a network endpoint device to which a second client device (131) is connected via a second client-server interface,
means (1030) for determining at least one transmission property parameter from such received operation-administration-maintenance information, wherein said transmission property parameter is regarding to a data transmission property of said data transmission path,
said decision means (1030, 1040) and said transmission means (1020, 1001) signal said at least one transmission property message towards said first client device via said client-server interface in dependence on said determined at least one transmission property parameter, **characterized**
**in that** said transmission property message contains one or more of the following
• a measured value of an error rate and/or a data item indicating a change of the error rate,
• a measured value of a bandwidth and/or a data item indicating a change of the bandwidth,
• a measured value of a latency for a single transmission path,
• a measured value of a differential latency for a group of transmission paths and/or a data item indicating a change of a latency or a differential latency,
• a data item or logical data indicating that said provided transmission path is or is not available,
• a data item or logical data indicating that a provided transmission path can or can not be protected by means of a protection path, or
• a data item or logical data indicating that the network is taking actions to protect said provided path by rerouting a data transmission via a protection path.

## Patentansprüche

1. Verfahren zur Signalisierung von Datenübertragungspfadeigenschaften, welches an einer ersten Netzwerkendpunktvorrichtung (101) die folgenden Schritte umfasst:
- Bereitstellen, über eine Client/Server-Schnittstelle, mindestens eines Datenübertragungspfads (140) von der besagten ersten Netzwerkendpunktvorrichtung (101) zu einer zweiten Netzwerkendpunktvorrichtung (102) an eine erste Client-Vorrichtung (130),
- Empfangen, über eine Server/Netzwerk-Schnittstelle, von durch die besagte zweite Netzwerkendpunktvorrichtung (102) oder interne Netzwerkvorrichtungen erzeugten Betriebs-, Verwaltungs- und Wartungs- bzw. OAM-Informationen,
- Beenden der besagten empfangenen Betriebs-, Verwaltungs- und Wartungsinformationen,
- Signalisieren, über die besagte Client/Server-Schnitstelle, mindestens einer Übertragungseigenschaftennachricht an die besagte erste Client-Vorrichtung (130),
- wobei die besagte zweite Netzwerkendpunktvorrichtung (102) eine Netzwerkendpunktvorrichtung ist, mit welcher eine zweite Client-Vorrichtung (131) über eine zweite Client/Server-Schnittstelle verbunden ist,
- Ermitteln mindestens eines Übertragungseigenschaftenparameters aus den besagten empfangenen Betriebs-, Verwaltungs- und Wartungsinformationen, wobei der besagte Übertragungseigenschaftenparameter eine Datenübertragungseigenschaft des besagten Datenübertragungspfads (140) betrifft,
wobei die besagte mindestens eine Übertragungseigenschaftennachricht in Abhängigkeit von dem besagten mindestens einen Übertragungseigenschaftenparameter an die besagte erste Client-Vorrichtung (130) signalisiert wird,
**dadurch gekennzeichnet, dass** die besagte Übertragungseigenschaftennachricht eine oder mehrere der folgenden Eigenschaften enthalt:
• Einen gemessenen Wert einer Fehlerrate und/oder ein Datenelement, welches eine Änderung der Fehlerrate anzeigt,
• einen gemessenen Wert einer Bandbreite und/oder ein Datenelement, welches eine Änderung der Bandbreite anzeigt,
• einen gemessenen Wert einer Latenz für einen einzelnen Übertragungspfad.
• einen gemessenen Wert einer Differenzlatenz für eine Gruppe von Übertragungspfaden und/oder ein Datenelement, welches eine Änderung einer Latenz oder einer Differenzlatenz anzeigt,
• ein Datenelement oder logische Daten, welche anzeigen, dass der besagte bereitgestellte Übertragungspfad nicht verfügbar ist,
• ein Datenelement oder logische Daten, welche anzeigen, dass der besagte bereitgestellte Übertragungspfad anhand eines Schutzpfads geschützt oder nicht geschützt werden kann, oder
• ein Datenelement oder logische Daten, welche anzeigen, dass ein Netzwerk Aktionen vornimmt, um den besagten bereitgestellten Pfad durch Umleiten einer Datenübertragung über einen Schutzpfad zu schützen.

2. Verfahren nach Anspruch 1,
wobei der besagte Übertragungseigenschaftenparameter eine Datenübertragungsleistung über den besagten Datenübertragungspfad (140) betrifft.

3. Verfahren nach Anspruch 2,
wobei die besagte Client/Server-Schnittstelle eine Ethernetteilnehmer/Netzwerk-Schnittstelle, UNI, ist.

4. Verfahren nach Anspruch 3,
wobei die besagten Betriebs-, Verwaltungs- und Wartungsinformationen paketbasierte Betriebs-, Verwaltung- und Wartungsnachrichten sind.

5. Verfahren nach Anspruch 4,
wobei die besagten paketbasierten Betriebs-, Verwaltungs- und Wartungsnachrichten Ethernet-Betriebs, Verwaltungs- und Wartungsnachrichten sind.

6. Verfahren nach Anspruch 5,
wobei der besagte Schritt des Beendens der besagten Betriebs-, Verwaitungs- und Wartungsnachrichten das Beenden von empfangenen Ethernet-Betriebs, Verwaltungs- und Wartungsnachrichten an der besagten ersten Server-Netzwerkendpunktvorrichtung (101), welche von der besagten zweiten Netzwerkendpunktvorrichtung (102), internen Netzwerkvorrichtungen oder weiteren Client-Vorrichtungen (131), die an das Netzwerk angeschlossen sind, erzeugt wurden, umfasst.

7. Verfahren nach Anspruch 1 bis 2,
wobei die besagten Betriebs-, Verwaltungs- und Wartungsinformationen innerhalb eines Overheads einer Datentransporteinheit eines Transportnetzwerks übertragen werden.

8. Verfahren nach Anspruch 7,
wobei das besagte Transportnetzwerk ein Netzwerk mit Synchroner Digitaler Hierarchie oder ein optisches Transportnetzwerk ist.

9. Server-Netzwerkendpunktvorrichtung zur Bereitstellung eines Datenübertragungspfads, wobei die besagte Server-Netzwerkendpunktvorrichtung umfasst:
- Mittel (1001, 1002 zum Bereitstellen, über eine Client/Server-Schnittstelle, mindestens eines Datenübertragungspfads von der besagten ersten Netzwerkendpunktvorrichtung zu einer zweiten Netzwerkendpunktvorrichtung an eine erste Client-Vorrichtung,
- Mittel (1040) zum Empfangen und Beenden von Betriebs-, Verwaltungs- und Wartung- bzw. OAM-Informationen,
- Beenden der besagten empfangenen Betriebs-, Verwaltungs- und Wartungsinformationen,
- Entscheidungsmittel (1030, 1040) und Übertragungsmittel (1020, 1001) zum Signalisieren, über die besagte Client/Server-Schnittstelle, mindestens einer Übertragungseigenschaftennachricht an die besagte erste Client-Vorrichtung,
- wobei die besagte zweite Netzwerkendpunktvorrichtung (102) eine Netzwerkendpunktvorrichtung ist, mit welcher eine zweite Client-Vorrichtung (131) über eine zweite Client/Server-Schnittstelle verbunden ist,
- Mittel (1030) zum Ermitteln mindestens eines Übertragungseigenschaftenparameters aus solchen empfangenen Betriebs-, Verwaltungs- und Wartungsinformationen, wobei der besagte Übertragungseigenschaftenparameter eine Datenübertragungseigenschaft des besagten Datenübertragungspfads betrifft,
wobei die besagten Entscheidungsmittel (1030, 1040) und die besagten Übertragungsmittel (1020, 1001) die besagte mindestens eine Übertragungseigenschaftennachricht in Abhängigkeit von dem besagten mindestens einen Übertragungseigenschaftenparameter an die besagte erste Client-Vorrichtung signalisieren,
**dadurch gekennzeichnet, dass** die besagte Übertragungseigenschaftennachricht eine oder mehrere der folgenden Eigenschaften enthält:
• Einen gemessenen Wert einer Fehlerrate und/oder ein Datenelement, welches eine Änderung der Fehlerrate anzeigt,
• einen gemessenen Wert einer Bandbreite und/oder ein Datenelement, welches eine Änderung der Bandbreite anzeigt,
• einen gemessenen Wert einer Latenz für einen einzelnen Übertragungspfad,
• einen gemessenen Wert einer Differenztatenz für eine Gruppe von Übertragungspfaden und/oder ein Datenelement, welches eine Änderung einer Latenz oder einer Differenzlatenz anzeigt,
• ein Datenelement oder logische Daten, welche anzeigen, dass der besagte bereitgestellte Übertragungspfad nicht verfügbar ist,
• ein Datenelement oder logische Daten, welche anzeigen, dass der besagte bereitgestellte Übertragungspfad anhand eines Schutzpfads geschützt oder nicht geschützt werden kann, oder
• ein Datenelement oder logische Daten, welche anzeigen, dass ein Netzwerk Aktionen vornimmt, um den besagten bereitgestellten Pfad durch Umleiten einer Datenübertragung über einen Schutzpfad zu schützen.

## Revendications

1. Procédé de signalisation des propriétés d'un chemin de transmission de données comprenant, au niveau d'un premier appareil d'extrémité de réseau (101), les étapes suivantes :
- fourniture par le biais d'une interface client-serveur à un premier appareil client (130), d'au moins un chemin de transmission de données (140) dudit premier appareil d'extrémité de réseau (101) vers un deuxième appareil d'extrémité de réseau (102),
- réception, par le biais de l'interface client-serveur, d'informations d'exploitation/administration/maintenance, OAM, générées par ledit deuxième appareil d'extrémité de réseau (102) ou des appareils de réseau internes,
- terminaison desdites informations d'exploitation/administration/maintenance,
- signalisation, par le biais de l'interface client-serveur, d'au moins un message de propriété de transmission en direction dudit premier appareil client (130),
- ledit deuxième appareil d'extrémité de réseau (102) étant un appareil d'extrémité de réseau auctuel un deuxième appareil client (131) est connecté par le biais d'une deuxième interface client-serveur,
- détermination d'au moins un paramètre de propriété de transmission à partir desdites informations d'exploitationladministration/maintenance, ledit paramètre de propriété de transmission concernant une propriété de transmission de données dudit chemin de transmission de données (140),
- ledit au moins un message de propriété de transmission étant signalé en direction dudit premier appareil client (130) en fonction dudit au moins un paramètre de propriété de transmission, **caractérisé en ce que** ledit message de propriété de transmission contient un ou plusieurs des éléments suivants :
• une valeur mesurée d'un taux d'erreurs et/ou un élément de données indiquant un changement du taux d'erreurs,
• une valeur mesurée d'une largeur de bande et/ou un élément de données indiquant un changement de la largeur de bande,
• une valeur mesurée d'une latence pour un chemin de transmission unique,
• une valeur mesurée d'une latence différentielle pour un groupe de chemins de transmission et/ou un élément de données indiquant un changement d'une latence ou d'une latence différentielle,
• un élément de données ou des données logiques indiquant si ledit chemin de transmission fourni est disponible ou non,
• un élément de données ou des données logiques indiquant si ledit chemin de transmission fourni peut ou ne peut pas être protégé au moyen d'un chemin de protection, ou
• un élément de données ou des données logiques indiquant que le réseau entreprend des actions pour protéger ledit chemin fourni en réacheminant une transmission de données par le biais d'un chemin de protection.

2. Procédé selon la revendication 1
selon lequel ledit paramètre de propriété de transmission concerne une performance de transmission de données par le biais dudit chemin de transmission de données (140).

3. Procédé selon la revendication 2
selon lequel ladite interface client-serveur est une interface de réseau Ethernet, UNI.

4. Procédé selon la revendication 3
selon lequel lesdites informations d'exploitation/administration/maintenance sont des messages d'exploitation/administration/maintenance en paquets.

5. Procédé selon la revendication 4
selon lequel lesdits messages d'exptoitation/administration/maintenance en paquets sont des messages d'exploitation/administration/maintenance Ethernet.

6. Procédé selon la revendication 5
selon lequel ladite étape de terminaison desdits messages d'exploitation/administration/maintenance comprend la terminaison de tout message d'exploitation/administration/maintenance Ethernet reçu au niveau d'un premier appareil d'extrémité de réseau (101) généré par le deuxième appareil d'extrémité de réseau (102), des appareils de réseau internes ou des appareils clients (131) supplémentaires connectés au réseau.

7. Procédé selon la revendication 1 ou 2
selon lequel lesdites informations d'exploitation/administration/maintenance sont transmises au sein d'un préfixe d'une unité de transport de données d'un réseau de transport.

8. Procédé selon la revendication 7
selon lequel ledit réseau de transport est un réseau de la hiérarchie numérique synchrone ou un réseau de transport optique.

9. Appareil d'extrémité de réseau serveur pour produire un chemin de transmission de données, ledit appareil d'extrémité de réseau serveur comprenant :
- des moyens (1001, 1002) pour fournir à un premier appareil client, par le biais d'une interface client-serveur, au moins un chemin de transmission de données dudit premier appareil d'extrémité de réseau vers un deuxième appareil d'extrémité de réseau,
- des moyens (1040) pour recevoir et terminer des informations d'exploitation/administration/maintenance, OAM,
- des moyens de décision (1030, 1040) et des moyens de transmission (1020, 1001) pour la signalisation d'au moins un message de propriété de transmission en direction dudit premier appareil client par le biais de ladite interface client-serveur,
- ledit deuxième appareil d'extrémité de réseau (102) étant un appareil d'extrémité de réseau auquel un deuxième appareil client (131) est connecté par le biais d'une deuxième interface client-serveur,
- des moyens (1030) de détermination d'au moins un paramètre de propriété de transmission à partir de telles informations d'exploitation/administration/maintenance reçues, ledit paramètre de propriété de transmission concernant une propriété de transmission de données dudit chemin de transmission de données,
- lesdits moyens de décision (1030, 1040) et lesdits moyens de transmission (1020, 1001) signalant ledit au moins un message de propriété de transmission en direction dudit premier appareil client par le biais de ladite interface client-serveur en fonction dudit au moins un paramètre de propriété de transmission déterminé, **caractérisé en ce que** ledit message de propriété de transmission contient un ou plusieurs des éléments suivants :
• une valeur mesurée d'un taux d'erreurs et/ou un élément de données indiquant un changement du taux d'erreurs,
• une valeur mesurée d'une largeur de bande et/ou un élément de données indiquant un changement de la largeur de bande,
• une valeur mesurée d'une latence pour un chemin de transmission unique,
• une valeur mesurée d'une latente différentielle pour un groupe de chemins de transmission et/ou un élément de données indiquant un changement d'une latence ou d'une latence différentielle,
• un élément de données ou des données logiques indiquant si ledit chemin de transmission fourni est disponible ou non,
• un élément de données ou des données logiques indiquant si ledit chemin de transmission fourni peut ou ne peut pas être protégé au moyen d'un chemin de protection, ou
• un élément de données ou des données logiques indiquant que le réseau entreprend des actions pour protéger ledit chemin fourni en réacheminant une transmission de données parle biais d'un chemin de protection.
